# EUROPEAN PATENT APPLICATION

(11) **EP 3 255 750 A1**
(43) Date of publication of application: **13.12.2017**
(21) Application number: 16746057.5
(22) Date of filing: 05.01.2016
(51) Int. Cl.: H02J 3/38

(54) **HIGH-EFFICIENCY AND ENERGY-SAVING METHOD FOR OPERATING POWER NETWORK**

(30) Priority: 04.02.2015 CN 201510056957
(71) Applicant: Gu, Weidong, Qingliangmen Street Jiangsu province (CN)
(72) Inventor: Gu, Weidong, Qingliangmen Street Jiangsu province (CN)
(74) Representative: 2K Patentanwälte Blasberg Kewitz & Reichel
(86) International application number: PCT/CN2016/070156
(87) International publication number: WO 2016/124062

(57) **Abstract**

The present invention relates to an efficient and energy-saving power grid operation method, belonging to the technical field of power control. The method comprises the following steps of: calculating the disposable electricity power for high power consumption industrial users in the power grid by a power grid control center according to a predicted load value in a power grid and the rated output power of a power generation side in the power grid, wherein the disposable electricity power is the difference between the rated output power and the predicted load value; performing electricity-consuming operations via high power consumption industrial users according to the disposable electricity power. The method converts high power consumption industries into highly efficient industries, reduces the operation cost of enterprises while realizing stable running of the power grid. The method improves the utilization rate of the power grid, ensures the high-load running of thermal power stations and nuclear power stations, avoids increases in the production cost of the thermal power and nuclear power enterprises by regulating loads, and also ensures that the renewable resource of generated electricity can be completely incorporated into the power grid to be used.

## Description

### Technical Field

The present invention relates to a power grid operation method, belonging to the technical field of power control.

### Description of Related Art

Since the reform and opening-up, China's economy has made astounding advances at a high speed. The Chinese GDP per capita increased by 8.16% each year from 1987 to 2004, always topping the list of the world's GDP growth. China has made remarkable achievements in the world. At this stage, the rapid growth of the economy, and the continuous optimization and evolution of industrial structures played a key role. Secondary industry is the pillar industry of China. However, regarding the guidance of the structural transformation policies for Chinese economic industries, industry engineering, as the pillar of Chinese economy, also faces challenges of transformation. By the effect of regulatory policies which guide high power consumption industries to resolve the contradiction of excessive production capacities, the proportion of the high power consumption industries dropped from 32.2% in 2008 to 28.9% in 2013 in the aspect of the industrial added value.

Six major high power consumption industries, namely the chemical raw material and product manufacturing industry, the non-metal mineral product industry, the ferrous metal smelting and rolling industry, the petroleum refining and coking and nuclear fuel processing industry, the production and distribution industry of electricity and heat, have made a contribution of up to 42.7% to the total electricity consumption growth. The high power consumption industries are still the main driving force of the total electricity consumption growth.

However, in order to construct an energy-saving society, measures of highlighting energy consumption during power utilization, continuously issuing governance policies, implementing step-type electricity prices, and forbidding reduction of electricity prices for high energy consumption projects have been taken. Along with the continuous adjustment of the industrial electricity price, the rise in electricity prices erodes the profit margin of the high power consumption industries, which has affected the survival of the high power consumption industries. Uncompetitive laggard industries have been gradually washed out. The industries have undergone structural adjustment and resources re-distribution.

As the economy grows, the domestic power supply and power demands also grow rapidly. The total electricity consumption of China reached 4,959.1 billion KWH in 2012, with a year-on-year growth rate of 5.5%. The domestic total electricity consumption in 2012 is 16.8 times that in 1980, and the annular growth rate is 9.2%. The shortage in the nationwide power supply was basically relieved.

Coal, as a main energy source in China, accounts for about 70% of the total primary energy consumption. In China, the installed-capacity of coal-fired plants reached 758 million KWH in 2012, accounting for 66.2% of the total installed capacity; and the generating capacity of the coal-fired plants reached 3.68 trillion KWH, accounting for 73.9% of total generating capacity. Domestic rich coal resources determine that China will maintain a power source structure which uses coal-generated electricity as its mainstay for a relatively long period of time.

The power source structure taking coal-generated electricity as its mainstay cannot undergo deep peak regulation. Therefore, the domestic power grid is disadvantageous in unreasonable power distribution, causing structural contradictions to power sources (base-load, mediate-load, peak-load supply), which means that the power grid seriously lacks a peak-regulating power source. For years, China has always forced supercritical and super-supercritical 600,000-1,000,000 KWH generating sets to participate in peak regulation in a certain scope. Running in the 50% sub-critical state at the valley, the low-carbon generating sets have performed high-carbon operations. Along with the urbanization and industrialization, the peak-valley difference of the annular increasing electric load of the power grid will exceed 50%.

Along with the adjustment of the industrial structure, fundamental changes in the power consumption structure and changes in the power consumption-power supply relationship have resulted in a gradual increase in the peak-valley difference of the power grid. Generally, the peak-valley ratio is 1:0.63 in developing countries and 1:0.25 in developed countries. However, the peak-valley difference of the load of the trans-provincial power systems in China is usually about 30-40% of the maximum load.

Constricted by the current national situations and various factors, China cannot utilize peak-regulating smart power stations (pumped storage power stations, gas power stations, fuel power plants, etc.) in a large scale to supplement the peak-valley difference as the developed countries do. Even if the electrical power value can be predicted and the peak-regulating smart power stations can be used, the conversion rate of the energy sources is only 75%, and 25% of the energy sources is wasted. Therefore, China faces increasing challenges in peak regulation.

### BRIEF SUMMARY OF THE INVENTION

The technical problem to be solved by the present invention is to provide an efficient power grid operation system with a high utilization rate to overcome defects in the prior art.

The technical solution put forward by the present invention to solve the above technical problems is as follows. An efficient and energy-saving power grid operation method includes the steps of calculating disposable electricity power for high power consumption industrial users in a power grid via a power grid control center according to predicted load values in the power grid and the rated output power of a power generation side in the power grid, wherein the disposable electricity power is the difference between the rated output power and the predicted load value; performing electricity-consuming operation via the high power consumption industrial users according to the disposable electricity power.

As an improvement of the above technical solution, the low energy consumption industrial users in the power grid include residential users, primary-industry users, tertiary-industry users and conventional industrial users; the predicted load values are residential user loads, primary-industry user loads, tertiary-industry user loads and conventional industrial user loads.

As an improvement of the above technical solution, the rated output power of the power generation side is constant or basically constant.

As an improvement of the above technical solution, the power generation side includes nuclear power plants, thermal power plants and renewable energy power plants.

By employing the above technical solution, the present invention has the following beneficial effects: by the method, the high power consumption industries are converted into high-efficiency industries, and excessive electricity generated by the power plants are consumed by means of the characteristics of the high power consumption industries. In this way, power generating sets do not need to bear losses caused by non-conventional peak regulation, thus reducing consumption of the non-renewable resources such as coal, and also reducing the operation and maintenance cost of the generating sets.

Compared with other enterprises, enterprises in the high energy consumption industries that utilize the method have advantages of great reduction in the production cost, and the power plants run efficiently, capable of improving on the coal utilization efficiency, and enhancing economical benefits of the enterprises and the power grids.

### BRIEF DESCRIPTION OF THE SEVERAL VIEWS OF THE DRAWINGS

The present invention is described in further detail with reference to the attached drawings.
FIG.1 Diagram of comparison between the operation load curve of a traditional power grid and the operation load curve of a novel power grid according to an embodiment of the present invention; and
FIG.2 is a flowchart of an efficient and energy-saving power grid operation method according to the embodiment of the present invention.

### DETAILED DESCRIPTION OF THE INVENTION

### Embodiment

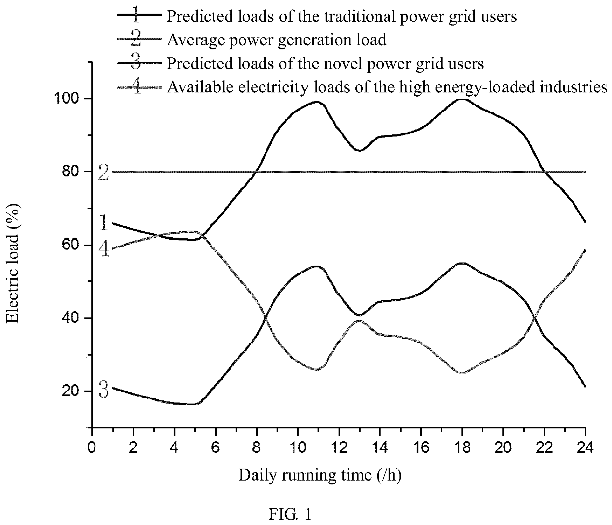

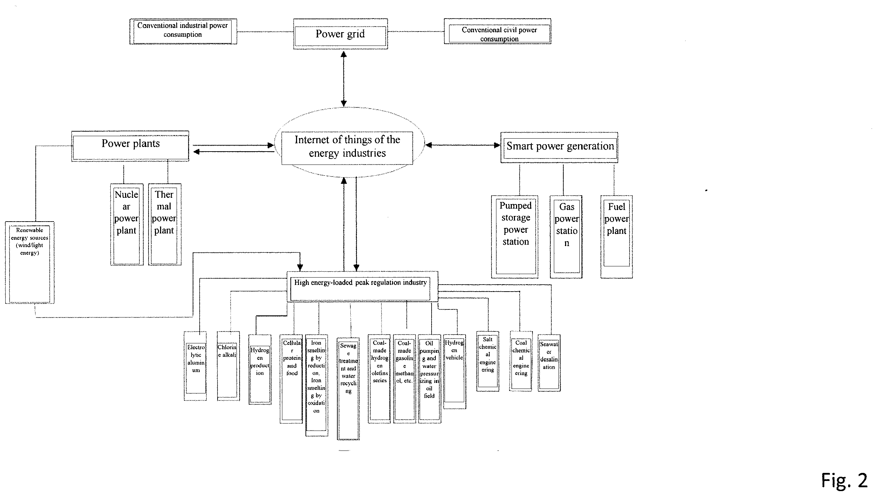

As shown in FIG.1 and FIG.2, an efficient and energy-saving power grid operation method is provided. The power grid includes a power grid control center, a power generation side, a power grid electricity utilization side, a high energy-loaded electricity utilization side, and the rated output power of the power generation side is constant or basically constant. The operation method includes the following steps:
1) The power grid control center calculates disposable electricity power (line 4 in FIG.1) for high power consumption industrial users according to a predicted load value of the power grid and the rated output power of the power generation side; the power grid removes the electric loads of the traditional high power consumption industrial users, namely obtaining novel power grid-side electric load (line 3 in FIG.1); thermal power stations and nuclear power stations run according to the optimal output load, wherein some of the small thermal power stations are shut down because of poor benefits and cannot access the power grid, while the other thermal power stations, nuclear power stations and hydropower stations run at a load of 80% of the daily maximum load; renewable energy power generation stations work on demand, and are not incorporated in the average power generation load (line 2 in FIG.1); and the renewable energy generated electricity is directly consumed by the high power consumption users.
2) Users among the high power consumption industrial users perform electricity-consumption operation according to the disposable electricity power; through technical innovations, the high power consumption industrial users can realize dramatic fluctuating loads;
   and the disposable electricity power is the difference between the rated output power and the predicted load value.

In this embodiment, the power grid user side includes residential users, primary-industry users, tertiary-industry users and conventional industrial users; the predicted load values are residential user loads, primary-industry user loads, tertiary-industry user loads and conventional industrial user loads.

In this embodiment, the power generation side includes nuclear power plants, thermal power plants, renewable energy power plants, and peak regulating plants.

As shown in FIG.1, from the predicted load line of the traditional power grid users, the average power generation load line, the predicted load line of the novel power grid users and the available electricity load line of the high energy-loaded industries it can be seen that, in this embodiment of the present invention, the predicted load line of the traditional power grid user and the predicted load line of the novel power grid users are basically the same, while the available electricity load line of the high energy-loaded industries is opposite to the former two, but finally, power consumption and power supply reach a balance, thus meeting the average power generation load line on the power generation side, thereby improving the energy source conversion efficiency, directly reducing the consumption of the non-renewable resources, and making low-carbon and environment protection contributions.

The present invention is not limited to the above embodiment. Technical solutions formed by equivalent substitution shall all fall within the protective scope of the claims of the present invention.

## Claims

1. An efficient and energy-saving power grid operation method, **characterized in that**, a power grid control center calculates disposable electricity power for high power consumption industrial users in a power grid according to predicted load values in the power grid and the rated output power of a power generation side in the power grid, wherein the disposable electricity power is the difference between the rated output power and the predicted load values; the high energy consumption industrial users perform electricity-consumption operation according to the disposable electricity power.

2. The efficient and energy-saving power grid operation method according to claim 1, **characterized in that** low energy consumption industrial users in the power grid include residential users, primary-industry users, tertiary-industry users and conventional industrial users; the predicted load values are residential user loads, primary-industry user loads, tertiary-industry user loads and conventional industrial user loads.

3. The efficient and energy-saving power grid operation method according to claim 1, **characterized in that** the rated output power of the power generation side is constant or basically constant.

4. The efficient and energy-saving power grid operation method according to claim 1 or 3, **characterized in that** the power generation side includes nuclear power plants, thermal power plants and renewable energy power plants.
